# EUROPEAN PATENT SPECIFICATION

(11) **EP 2 029 650 B1**
(45) Date of publication and mention of the grant of the patent: **10.01.2018**
(21) Application number: 07730273.5
(22) Date of filing: 20.06.2007
(51) Int. Cl.: C08G 18/79, C08G 18/42, C09D 175/06, C08G 18/24, C09D 175/04

(54) **ACTINIC RADIATION-CURABLE COATING COMPOSITION**
DURCH AKTINISCHE STRAHLUNG HÄRTBARE BESCHICHTUNGSZUSAMMENSETZUNG
COMPOSITION DE REVÊTEMENT DURCISSABLE PAR RAYONNEMENT ACTINIQUE

(30) Priority: 22.06.2006 EP 06115888; 11.07.2006 US 819635 P
(43) Date of publication of application: 04.03.2009
(73) Proprietor: Ciba Holding Inc., 4057 Basel (CH)
(72) Inventor: VAN DEN BERG, Keimpe Jan, 2171 PS Sassenheim (NL); VAN OORSCHOT, Josephus Christiaan, 4921 AC Made (NL); BENNINGSHOF-HULSBOS, Edith, 3445 TB Woerden (NL); VAN BEELEN, Jan Cornelis, 2225 AH Katwijk (zh) (NL)
(74) Representative: Maiwald Patentanwalts GmbH
(86) International application number: PCT/EP2007/056145
(87) International publication number: WO 2007/147851

(56) References cited:
- EP-A- 1 354 903
- EP-A2- 0 250 364
- GB-A- 2 123 012

## Description

The invention relates to an actinic radiation-curable coating composition comprising a compound having at least two isocyanate groups, a compound having at least two hydroxyl groups, and a photolatent catalyst for the isocyanate-hydroxyl addition reaction. The invention further relates to a process for forming a coating on a substrate and to a kit of parts.

An actinic radiation-curable coating composition of the above-mentioned type is known from Research Disclosure 42616. This document describes a daylight-activated catalyst which can be used in the reaction of isocyanate and hydroxyl groups in coating compositions. The catalyst is a ruthenium complex having a bond between ruthenium and tin. The complex decomposes as a result of irradiation by daylight in a ruthenium-containing fragment and a SnR3 radical. The radicals are terminated by reaction with surrounding compounds. After termination of the radicals the SnR3-containing compounds formed are active as catalysts of the isocyanate-hydroxyl addition reaction, while before irradiation the complex was not.

A drawback of the known actinic radiation-curable coating composition is that the catalyst is coloured. As a consequence, also the applied coating is coloured. Although the intensity of the colour decreases upon irradiation by visible light, the cured coating is not completely colourless. This limits the usefulness of the known coating composition, in particular for applications where a colour match is required, such as the refinishing of automobiles. Activation of the catalyst by daylight requires special precautions in handling the catalyst and the coating composition to prevent premature activation of the catalyst by unintentional exposure to daylight. Furthermore, a relatively high amount of catalyst is required to achieve practical curing speeds.

An actinic radiation-curable coating composition is also known from US 4549945. This document describes that the addition of certain organotin compounds to a mixture of a diisocyanate and a polyol provides for a
photocurable composition which when exposed to ultraviolet light effects rapid curing. Curing is not achieved until the reaction mixture is exposed to ultraviolet light in an amount sufficient to effect activation of the UV light sensitive organotin compound. Useful UV light sensitive organotin compounds have a tin- tin bond.

The organotin compounds described in this document have been found to exhibit poor solubility in coating compositions comprising a polyisocyanate and a polyol, rendering a homogeneous distribution in the compositions difficult. Additionally, the compositions known from US 4549945 require irradiation with the more dangerous UV-C and/or UV-B radiation for adequate activation of the catalyst, whereas the less dangerous UV-A radiation is not sufficient.

GB 2 123 012 discloses an actinic radiation cured composition comprising a polyurethane acrylic copolymer containing a light scattering or fluorescing material.

EP 0 250 364 relates to a process for curing polyurethane lackers employing a special latent hardening catalyst.

EP 1 354 903 discloses a process using a delayed action tin catalyst.

The present invention seeks to provide an actinic radiation-curable coating composition which does not have the above-described drawbacks of the known compositions. More in particular, the composition should lead to cured coatings wherein the colour is not influenced by coloured residues and/or fragments of the photolatent catalyst so as allow use of the composition for applications where a colour match with surrounding coated surfaces is required, such as the refinishing of automobiles. The composition should not be prone to activation towards curing by unintended exposure to normal daylight prior to application. Activation of the catalyst in the composition should preferably be possible using the less dangerous UV-A and UV-B-radiation, and should not require the dangerous UV-C radiation. Furthermore, the photolatent catalyst should be sufficiently soluble in coating compositions comprising a polyisocyanate and a polyol, allowing a homogeneous distribution of the photolatent catalyst in the compositions. The coating composition should also exhibit a good balance of long pot life and fast curing after application and irradiation. Such a balance is difficult to achieve with non-latent curing catalysts, in particular in so-called high solids coating compositions, i.e. compositions having a high non-volatile content.

The invention now provides an actinic radiation-curable coating composition comprising a compound having at least two isocyanate groups, a compound having at least two hydroxyl groups, a sensitizer selected from thioxanthanes, oxazines, rhodamines, benzophenone, and benzophenone derivatives and a photolatent catalyst for the isocyanate-hydroxyl addition reaction, wherein the photolatent catalyst is an organic metal compound comprising tin, and wherein the tin atom in the organic metal compound has no bonds to other metal atoms and wherein the organic metal compound is a compound having at least one covalent bond between a tin atom and a carbon atom of an organic moiety.

This composition leads to cured coatings wherein the colour is not influenced by coloured residues and/or fragments of the photolatent catalyst. Therefore, the composition can be used for applications where a colour match is required, such as the refinishing of automobiles. The composition is not prone to activation towards curing by unintended exposure to normal daylight prior to application. Activation of the catalyst in the composition is possible by the less dangerous UV-A radiation, and does not require the dangerous UV-C and/or UV-B radiation. Furthermore, the photolatent catalyst is sufficiently soluble in the coating composition, allowing a homogeneous distribution of the photolatent catalyst in the composition.

Suitable compounds having at least two isocyanate groups are organic diisocyanates. Preferably, the compound is a polyisocyanate, such as an aliphatic, cycloaliphatic or aromatic di-, tri- or tetra-isocyanate. Examples of diisocyanates include 1,2-propylene diisocyanate, trimethylene diisocyanate, tetramethylene diisocyanate, 2,3-butylene diisocyanate, hexamethylene diisocyanate, octamethylene diisocyanate, 2,2,4-trimethyl hexamethylene diisocyanate, dodecamethylene diisocyanate, ω, ω'-dipropylether diisocyanate, 1,3-cyclopentane diisocyanate, 1,2-cyclohexane diisocyanate, 1,4-cyclohexane diisocyanate, isophorone diisocyanate, 4-methyl-1,3-diisocyanatocyclohexane, trans-vinylidene diisocyanate, dicyclohexyl methane-4,4'-diisocyanate (Desmodur® W), toluene diisocyanate, 1,3-bis(isocyanatomethyl) benzene, xylylene diisocyanate, α,α,α',α'-tetramethyl xylylene diisocyanate (TMXDI®), 1,5-dimethyl-2,4-bis(2-isocyanatoethyl) benzene, 1,3,5-triethyl-2,4-bis(isocyanatomethyl) benzene, 4,4'-diisocyanato-diphenyl, 3,3'-dichloro-4,4'- diisocyanato-diphenyl, 3,3'-diphenyl-4,4'-diisocyanato-diphenyl, 3,3'-dimethoxy- 4,4'-diisocyanato-diphenyl, 4,4'-diisocyanato-diphenyl methane, 3,3'-dimethyl- 4,4'-diisocyanatodiphenylmethane, and diisocyanatonaphthalene. Examples of triisocyanates include 1,3,5-triisocyanatobenzene, 2,4,6-triisocyanatotoluene, 1,8-diisocyanato-4-(isocyanatomethyl) octane, and lysine triisocyanate. Adducts and oligomers of polyisocyanates, for instance biurets, isocyanurates, allophanates, uretdiones, urethanes, and mixtures thereof are also included. Examples of such oligomers and adducts are the adduct of 2 molecules of a diisocyanate, for example hexamethylene diisocyanate or isophorone diisocyanate, to a diol such as ethylene glycol, the adduct of 3 molecules of hexamethylene diisocyanate to 1 molecule of water (available under the trademark Desmodur N of Bayer), the adduct of 1 molecule of trimethylol propane to 3 molecules of toluene diisocyanate (available under the trademark Desmodur L of Bayer), the adduct of 1 molecule of trimethylol propane to 3 molecules of isophorone diisocyanate, the adduct of 1 molecule of pentaerythritol to 4 molecules of toluene diisocyanate, the adduct of 3 moles of α,α,α',α'-tetramethyl xylene diisocyanate to 1 mole of trimethylol propane, the isocyanurate trimer of 1,6-diisocyanatohexane, the isocyanurate trimer of isophorone diisocyanate, the uretdion dimer of 1,6-diisocyanatohexane, the biuret of 1,6-diisocyanatohexane, the allophanate of 1,6-diisocyanatohexane, and mixtures thereof. Also asymmetric trimers of diisocyanates, such as Desmodur XP 2410 from Bayer, can be used.

Furthermore, (co)polymers of isocyanate-functional monomers such as α,α'-dimethyl-m-isopropenyl benzyl isocyanate are suitable for use. Isocyanate-terminated oligomers and polymers are also suitable. Such oligomers or polymers may be prepared by the reaction of an active hydrogen-functional precursor with a stoichiometric excess of a diisocyanate. Suitable active hydrogen-functional groups are hydroxyl groups, thiol groups, and primary or secondary amino groups. Michael donor groups, such as malonates and acetoacetates, can be used as well. The active hydrogen-functional precursor may be a monomer, oligomer or polymer.

Examples of suitable hydroxyl-functional precursor oligomers or polymers are hydroxyl-functional polyesters, hydroxyl-functional polyacrylates, or hydroxyl-functional polycarbonates, as well as mixtures or hybrids thereof. It is also possible to employ hydrophilically modified polyisocyanates, in particular when the coating composition is a water borne coating composition. Hydrophilic modification of polyisocyanates can be implemented by the presence of ionic or non-ionic polar groups. Examples of suitable hydrophilic polyisocyanates are Bayhydur 3100, Bayhydur XP 2487/1, and Bayhydur XP 2570, all available from Bayer. In order to obtain sufficient outdoor durability, aliphatic polyisocyanates are preferred over aromatic polyisocyanates, in particular when the coating composition is applied as a top coat in a multi-layer lacquer coating. The aliphatic groups may be acyclic or cyclic.

Suitable compounds comprising at least two hydroxyl groups may be monomers, oligomers, polymers, and mixtures thereof. Examples of hydroxy- functional oligomers and monomers are castor oil, trimethylol propane, and diols. Branched diols such as described in international patent application WO 98/053013, e.g. 2-butyl-ethyl-1,3-propanediol, may be particularly mentioned. Examples of suitable polymers include polyester polyols, polyacrylate polyols, polycarbonate polyols, polyurethane polyols, and mixtures and hybrids thereof. Such polymers are generally known to the skilled person and are commercially available. Suitable polyester polyols, polyacrylate polyols, and mixtures thereof are for example described in international patent application WO 96/20968 and in European patent application EP 0688840 A. Examples of suitable polyurethane polyols are described in international patent application WO 96/040813.

In the coating composition according to the invention the equivalent ratio of isocyanate-functional groups to hydroxyl groups suitably is between 0.5 and 4.0, preferably between 0.7 and 2.5, and more preferably between 0.8 and 1.2. Generally, the weight ratio of hydroxy-functional binders to isocyanate-functional
crosslinker in the coating composition, based on non-volatile content, is between 85 : 15 and 15 : 85, preferably between 70 : 30 and 30 : 70.

The coating composition according to the invention additionally comprises a sensitizer. A sensitizer is a radiation-absorbing agent which enhances the activation of a photolatent catalyst. A sensitizer may be used to extend the spectral response of a photolatent catalyst. More in particular, a sensitizer can be added to a radiation-curable composition to allow activation of the composition by radiation having wavelengths outside the absorption range of the photolatent catalyst itself.

Examples of suitable sensitizers are thioxanthones such as isopropyl thioxanthone according to the following formula, 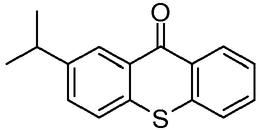 oxazines, and rhodamines. Also suitable are benzophenone and derivatives thereof. Examples of suitable derivatives of benzophenone are: 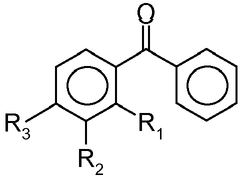 wherein R₁, R₂, and R₃ may be the same or different and stand for CH₃ or H, 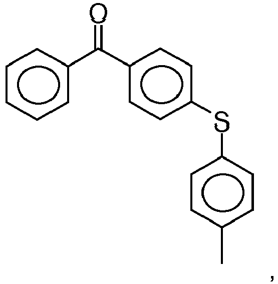 and 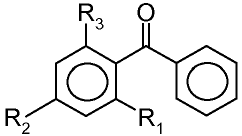 wherein R₁, R₂, and R₃ may be the same or different and stand for CH₃ or H. Such sensitizers are commercially available, for example ex Lambson. Also suitable are dyes such as Rose Bengal, Methylene Blue, and Eosin Y. The sensitizer generally is used in an amount of 0.02 to 8% by weight on solid curable material in the coating composition, preferably 0.1 to 4% by weight. The composition of the invention comprises a photolatent catalyst for the isocyanate-hydroxyl addition reaction. Before irradiation with actinic radiation the photolatent catalyst has no or only a low catalytic activity for the addition reaction of isocyanate groups and hydroxyl groups. The photolatent catalyst is an organic metal compound comprising tin, and tin atom in the organic metal compound has no bonds to other metal atoms. Organic metal compounds are compounds having at least one covalent bond between a tin atom and a carbon atom of an organic moiety. It should be noted that complexes formed from metal (ions) and aromatic ring systems do not have a covalent bond between carbon atoms of the aromatic ring system and the metal atom. Therefore, such complexes, of which ferrocene and derivatives may be mentioned as examples, are not considered organic metal compounds. The suitable catalytically active metal is tin. It is also within the scope of the invention to use a mixture or blend of photolatent catalysts.

Photochemically induced cleavage of an organic group attached to the latent catalytically active metal may initiate activation of the photolatent catalyst. Therefore, in one embodiment, the photolatent catalyst has at least one organic group attached to the metal via a photolytically cleavable bond. In a preferred embodiment, the photolatent catalyst has two organic groups attached to the metal via photolytically cleavable bonds. Examples of suitable photolytically cleavable organic groups attached to the metal are groups of the formula -CH₂-Ar wherein Ar represents an aromatic group. Examples of suitable aromatic groups are phenyl groups, naphthyl groups, furyl groups, thienyl groups, pyridyl groups, and N-substituted pyrrole groups. The aromatic groups are optionally substituted, for example with alkyl groups, halide groups, nitro groups, and alkoxy groups. Substitution of the aryl groups with electron donating groups, such a methoxy groups, can be used to shift the absorption spectrum of the photolatent catalyst to longer wavelengths, so that activation with the less dangerous UV-A radiation becomes possible. Additionally, further groups are attached to the metal atom to saturate the valencies of the metal concerned. Such groups may be monovalent radicals comprising hydrogen, hydroxyl, and alk(en)yl groups comprising 1-30 carbon atoms which may be linear or branched and may optionally contain one or more heteroatoms and groups selected from the group of oxygen, nitrogen, sulphur, phosphorus, sulphone, sulphoxy, and ester, optionally substituted with epoxy, cyano, amino, thiol, hydroxyl, halogen, nitro, phosphorus, sulphoxy, amido, ether, ester, urea, urethane, thioester, thioamide, amide, carboxyl, carbonyl, aryl, and acyl groups. For good solubility of the photolatent catalyst in organic coating compositions it is preferred that the photolatent catalyst is non-ionic, i.e. is not comprised of charged ions and counter ions.

Examples of suitable photolatent catalysts are dibutyl di-(3-methoxybenzyl)tin, dibutyl di-(naphthalene-1-yl-methyl)tin, and di-(naphthalene-2-yl-methyl)tin. Dibutyl dibenzyl tin is a preferred photolatent catalyst.

The photolatent catalyst is generally present in the composition in an amount of 0.01 % to 5% by weight, calculated on the non-volatile content of the composition. The curing rate is generally increased by a higher proportion of catalyst, for example at least 0.1 % by weight, at least 0.2 % by weight, or at least 0.4 % by weight, calculated on the non-volatile content of the composition. A too high proportion of catalyst may undesirably deteriorate the pot life of the composition, or may generate a too fast curing of the coating, which in turn can diminish its appearance. Therefore, the proportion of catalyst suitably does not exceed 4% by weight, preferably 2.5% by weight, calculated on the non-volatile content of the composition. In individual cases, the optimum proportion of catalyst may depend on the specific type of catalyst and on the desired balance of pot life and curing speed.

The composition of the invention may be free of volatile diluents. Alternatively, the composition comprises a volatile diluent to reduce the viscosity to the desired level. In one embodiment the volatile diluent may an organic solvent.
Examples of suitable organic solvents for the coating composition are hydrocarbons, such as toluene, xylene, Solvesso® 100; ketones, such as acetone, 2-butanone, methyl amyl ketone, and methyl iso-amyl ketone; terpenes, such as dipentene or pine oil; halogenated hydrocarbons, such as dichloromethane or para-chlorobenzotrifluoride; ethers, such as ethylene glycol
dimethyl ether, dipropyl ether, dibutyl ether, dipentyl ether, dioctyl ether; esters, such as ethyl acetate, ethyl propionate, n-butyl formate, n-butyl acetate, n-butyl propionate, n-butyl butyrate, the corresponding tert. -butyl, sec. -butyl, and iso- butyl esters, esters of linear or branched pentanol, hexanol, or octanol, such as 2-ethylhexanol; or ether esters, such as methoxypropyl acetate or ethoxyethyl propionate. Also mixtures of these compounds can be used. In view of current and future legislation it is preferred that the composition used according to the invention has a low content of volatile organic compounds (VOC). Examples of suitable VOC values are 500 g/l or less, 420 g/l or less, or 250 g/l or less. The present composition is particularly suitable for formulation of coating compositions having a low VOC value. Compared to high-VOC compositions, low-VOC compositions require a higher concentration of functional groups in the binder and often a higher amount of crosslinking catalyst, in order to compensate for the lack of physical drying by faster chemical crosslinking. With standard non-latent catalysts the required higher reactivity can only be achieved at the expense of the pot life of the composition. Hence, with non-latent catalysts the formulation of coating compositions comprising a polyisocyanate and a polyol having a very low VOC value and a good balance of pot life and curing speed is difficult. Due to the latency of the catalyst of the present composition this difficulty can be overcome, because relatively high amounts of the photolatent catalyst can be included in the composition without deterioration of the pot life. Thus, a good balance of low VOC value, pot life, and drying speed can be achieved.

In another embodiment, the coating composition of the invention is a water borne composition wherein the volatile diluent consists essentially of water. Examples of suitable binders serving as compounds having at least two hydroxyl groups in water borne coating compositions are polyester polyols, polyacrylate polyols, and polyurethane polyols. They may be used in the form of aqueous solutions, dispersions or emulsions. Such hydroxyl-functional binders for water borne coating compositions are generally known in the art. Specific
examples are described in international patent applications WO 01/81441, WO 00/49100, and WO 00/39181.

In addition to the components described above, other compounds can be present in the coating composition according to the present invention. Such compounds may be main binders and/or reactive diluents, optionally comprising reactive groups which may be cross-linked with the aforesaid hydroxy-functional compounds and/or isocyanate-functional crosslinkers. Examples include cellulose acetobutyrate, hydroxy-functional epoxy resins, alkyds, and dendrimeric polyols such as described in international patent applications WO 93/17060 and WO 99/16810.

The coating composition can also comprise latent hydroxy-functional compounds such as compounds comprising bicyclic orthoester, spiro- orthoester, spiro-ortho silicate groups, or bicyclic amide acetals. These compounds and their use are described in international patent applications WO 97/31073, WO 2004/031256, and WO 2005/035613, respectively. Finally, ketone resins, aspargyl acid esters, and latent or non-latent amino- functional compounds such as oxazolidines, ketimines, aldimines, diimines, secondary amines, and polyamines can be present. These and other compounds are known to the skilled person and are mentioned, int. al., in US 5214086.

The coating composition according to the invention can further comprise other ingredients, additives or auxiliaries commonly used in coating compositions, such as pigments, dyes, surfactants, pigment dispersion aids, levelling and wetting agents, such as BYK 306 and Byk 331 ex Byk Chemie, anti-cratering agents, antifoaming agents, antisagging agents, heat stabilizers, light stabilizers, UV absorbers, antioxidants, and fillers. When UV absorbers are present in the composition, their amounts and types are suitably selected so as to avoid interference with the curing of the composition by UV light.

In one embodiment the coating composition additionally comprises a pot life extending agent. A pot life extending agent is particularly beneficial when the photolatent catalyst exhibits a certain degree of catalytic activity also in the latent form. It may also be the case that the photolatent catalyst contains catalytically active impurities which deteriorate the pot life of the composition. Pot life extending agents increase the pot life of the coating composition, i.e. the time between the mixing of all components and the moment when the viscosity becomes too high for the composition to be applied. Pot life extending agents can suitably be present in similar amounts as the photolatent catalysts mentioned above. Preferred pot life extending agents have only a limited or no negative impact on the drying speed of the coating composition, in particular when curing the applied coating at elevated temperature, such as 40 to 60°C. Thus, these pot life extending agents improve the balance of pot life and drying speed. The pot life extending agent can also have a beneficial effect on the appearance of the coating. Examples of suitable pot life extending agents are carboxylic acid group-containing compounds, such as acetic acid, propionic acid or pentanoic acid. Aromatic carboxylic acid group-containing compounds are preferred, in particular benzoic acid. Other suitable pot life extending agents are dicarbonyl compounds, such as 2,4-pentanedione, phenolic compounds, tertiary alcohols such as tertiary butanol and tertiary amyl alcohol, and thiol group-containing compounds. It is also possible to use a combination of the above-mentioned pot life extending agents, such as a combination of an aromatic carboxylic acid group- containing compound and a thiol group-containing compound.

The invention also relates to a process of forming a coating on a substrate.
Such a process comprises the steps of
(a) applying an actinic radiation-curable coating composition comprising a compound having at least two isocyanate groups, a compound having at least two hydroxyl groups, and a photolatent catalyst for the isocyanate-hydroxyl addition reaction, wherein the photolatent catalyst is an organic metal compound comprising tin and wherein the tin atom in the organic metal compound has no bonds to other metal atoms and wherein the organic metal compound is a compound having at least one covalent bond between a tin atom and a carbon atom of an organic moiety, to a substrate, and
(b) irradiating the applied coating composition with actinic radiation, causing the photolatent catalyst to be activated.
The actinic radiation-curable coating composition can be applied to any substrate. The substrate may be, for example, metal, e.g., iron, steel, and aluminium, plastic, wood, glass, synthetic material, paper, leather, or another coating layer. The other coating layer can be comprised of the coating composition of the current invention or it can be a different coating composition. The actinic radiation-curable coating composition of the current invention shows particular utility as clear coats, base coats, pigmented top coats, primers, and fillers. When applied as a primer and/or filler composition, the coating composition suitably comprises anti-corrosive pigments, optionally in combination with fillers. In one embodiment of the process, the coating composition is applied as a layer in a multi-layer lacquer coating, for example as a top coat layer in a multi-layer lacquer coating. The top coat is preferably applied in the form of a clear coat over a colour- and/or effect-imparting base coat. The base coat may be a water borne base coat or a solvent borne base coat. Such multi-layer lacquer coatings are typically applied on the exterior of automobiles.

The coating composition and the process are suitable for coating objects such as bridges, pipelines, industrial plants or buildings, oil and gas installations, or ships. The composition and the process are particularly suitable for finishing and refinishing automobiles and large transportation vehicles, such as trains, trucks, buses, and airplanes.

In the process of refinishing of automobiles according to the invention, the coating composition can be applied to an automobile or a part thereof. The process is suitable for refinishing the entire automobile. Alternatively, it is possible to refinish damaged panels or replacement parts. In still another embodiment, refinishing can be carried out to repair small scratches or dents without refinishing an entire body panel. The latter method is generally referred to as spot repair. Application of the coating composition can be carried out by any method which is suitable for applying a liquid coating composition to a substrate. Examples of suitable methods are brushing, rolling, and spraying. The best results are frequently obtained when the coating composition is applied by spraying.

As mentioned above, after application of the coating composition the applied coating layer cures under the influence of actinic radiation. Examples of suitable forms of actinic radiation include electron beam radiation, UV radiation, and visible light. UV radiation, and in particular the less dangerous UV-A radiation, is preferred. Exposure of the applied coating composition can be carried out prior to, during or after evaporation of a volatile diluent, which may optionally be present in the coating composition. Upon irradiation the photolatent catalyst is activated to form an active catalyst for the isocyanate-hydroxyl addition reaction. It is not necessary to irradiate the applied coating composition during the entire period of curing. It is sufficient to irradiate until a substantial proportion of the photolatent catalyst is transformed into a catalytically active species. The actual duration of irradiation depends on the wavelength of the actinic radiation, the intensity of the radiation, as well as on the amount and type of photolatent catalyst employed. Suitable sources of actinic radiation are those customary for electron beam and UV. For example, UV sources such as high-, medium-, and low-pressure mercury lamps can be used. Further examples are fluorescent tubes, deuterium halogen light sources, laser light sources, mercury-xenon lamps, UV-light emitting diodes (LEDs), and metal halide lamps. Also, for instance, gallium and other doped lamps can be used, especially for pigmented coatings. It is also possible to accelerate curing of the coating composition by means of short pulses of actinic radiation.

In one embodiment of the present invention, especially when accelerating the curing of clear coats, the applied coating composition is irradiated using low- energy UV sources, i.e. by so-called daylight cure. Low-energy UV sources emit radiation of longer wavelengths than conventional UV sources. Low-energy UV sources emit hardly any UV-C radiation; they predominantly emit UV-A radiation and radiation with a wavelength at the border of UV-B and UV-A. One advantage of using a radiation source emitting radiation having a wavelength of 200 nm ≤ λ ≤ 500 nm is that it is safer to use than conventional UV sources, which emit a relatively high amount of UV-C and/or UV-B radiation. Another advantage is that daylight cure lamps are cheaper than conventional UV lamps. Commercially available daylight cure lamps are, for instance, solarium-type lamps and specific fluorescent lamps such as TL03, TL05 or TL10R lamps (ex Philips) and BLB UV lamps (ex CLE Design). As an example of a commercially available daylight cure lamp that emits short light pulses may be mentioned the mercury-free UVA/IS flash lamps of Xenon. The intensity of the radiation generally is within the range of 0.1 to 100 mW/cm². Generally, the duration of irradiation is in the range of 0.01 second to 30 minutes. Typically, irradiation is carried out for a period of 1 second to 15 minutes. Thereafter, curing occurs essentially by reaction of isocyanate groups and hydroxyl groups with formation of urethane links. Curing is generally completed in a temperature range of 0°C to 80°C. In one embodiment, curing is carried out at ambient temperature, i.e. in the range of about 5°C to about 40°C. In another embodiment, curing is completed in a heated curing chamber, for example at a temperature of 40°C to 80°C.

As usual with coating compositions comprising a compound having at least two isocyanate groups and a compound having at least two hydroxyl groups, the reaction of the isocyanate groups and the hydroxyl groups commences upon mixing of the components of the composition, even in the absence of a catalyst or when the catalyst is present in a latent form. As a consequence, the composition according to the invention also cures, although slowly, in areas which are not irradiated, unlike radiation-cured coatings curing by a radical polymerization. This is of particular advantage when three-dimensional shaped objects, having folds and grooves, are coated. In this case an even distribution of radiation intensity over the entire coated surface can be difficult or impossible to achieve. As a further consequence of the start of the addition reaction of the isocyanate groups and the hydroxyl groups upon mixing of the components of the composition, the composition has a limited pot life. Accordingly, the composition is suitably provided as a multi-component composition, for example as a two-component composition or as a three-component composition. Therefore, the invention also relates to a kit of parts for the preparation of an actinic radiation-curable coating composition comprising a) a module A) comprising a compound having at least two isocyanate groups and b) a module B) comprising a compound having at least two hydroxyl groups, and wherein in at least one of the modules A) and B), or in an additional module C), there are present a sensitizer, selected from thioxanthanes, oxazines, rhodamines, benzophenone, and benzophenone derivatives, and a photolatent catalyst for the isocyanate-hydroxyl addition reaction, wherein the photolatent catalyst is an organic metal compound comprising tin metal, and wherein the tin atom in the organic metal compound has no bonds to other metal atoms and wherein the organic metal compound is a compound having at least one covalent bond between a tin atom and a carbon atom of an organic moiety.

### Examples:

Raw materials used:

| | |
|---|---|
| Tolonate | HDT-LV A polyisocyanate based on the isocyanurate trimer of hexamethylene diisocyanate, ex Rhodia |
| Polyester polyol | Polyester polyol according to Example 2 of WO2002/098942 |
| ITX solution | A mixture consisting of 10 parts by weight of isopropyl thioxanthone and 90 parts by weight of n-butyl acetate |
| BMS solution | A mixture consisting of 10 parts by weight of Speedcure® BMS ex Lambson and 90 parts by weight of n-butyl acetate |
| Irgacure 184 solution | A mixture consisting of 10 parts by weight of Irgacure 184 ex Ciba Specialty Chemicals and 90 parts by weight of n-butyl acetate |
| BYK 306 solution | A mixture consisting of 10 parts by weight BYK 306 ex Byk Chemie and 90 parts by weight of ethyl 3-ethoxy propionate |
| DBTL solution | A mixture consisting of 10 parts by weight of dibutyl tin dilaurate and 90 parts by weight of n-butyl acetate |
| Photolatent base solution | A mixture consisting of 20 parts by weight of the compound according to the following structure |
| | 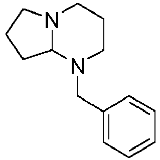 |
| | and 80 parts by weight of n-butyl acetate |
| Cyclopentadienyl iron | A mixture consisting of 10 parts by weight of (eta-5-compound solution cyclopentadienyl) (eta-6-fluorene) iron hexafluorophosphate and 90 parts by weight of 2-butanone |

The drying stage of applied coating layers was determined manually, with 10 drying stages being discerned:
1 The still wet coating is easily rubbed off with the thumb.
2 By touching the coating with the thumb, threads of paint may be drawn.
3 The coating is cohesive, but is easily damaged down to the substrate by gentle rubbing with the thumb.
4 Gentle rubbing with the thumb leaves a clear mark.
5 Gentle rubbing with the thumb hardly leaves a mark. A tuft of wadding, dropped on the paint, can be blown off. The coating is dust-dry.
6 Gentle rubbing with the thumb leaves no mark. On gentle rubbing or pushing with the palm of the hand a sticky effect is felt.
7 On gentle rubbing or pushing with the palm of the hand, no stickiness is observed. The coating is tack-free.
8 Firm pushing with the thumb leaves a permanent mark.
9 The mark from firm pushing with the thumb disappears after 1 - 2 minutes. The coating is touch-dry.
10 The coating can hardly, or cannot at all, be damaged by scratching with the (human) nail. The coating is hardened through.

### Preparation of dibutyl dibenzyl tin

In a dry 2 I 3-necked flask under nitrogen atmosphere, equipped with a dropping funnel with pressure compensation, a thermometer, a magnetic stir bar, and a condenser were placed 35.1 g (1.45 moles) of magnesium turnings. 200 ml of dry ether, a small crystal of iodine, and 50 ml of a solution of 182.9 g (1.45 moles) of benzyl chloride in 800 ml of dry ether were added. After about 5 minutes, the reaction started. The onset of the reaction was accompanied by the disappearance of the brown colour of iodine and a rising temperature. The remainder of the benzyl chloride in ether was added in the course of one hour. The mixture was stirred at room temperature for another hour. A dark blue solution with some residual magnesium was obtained. The solution was decanted into another dry 2 I 3-necked flask under nitrogen atmosphere to remove the residual magnesium. The benzyl magnesium chloride solution was cooled with an ice bath. A dropping funnel was filled with a solution of 109.8 g dibutyl tin chloride (0.36 moles) in 300 ml of dry ether. To the stirred benzyl magnesium chloride the dibutyltin chloride solution was then added in the course of 30 minutes, with a maximum reaction temperature of 25°C being maintained. The reaction mixture was stirred overnight at room temperature. The next day the mixture was slowly poured into a 3 I beaker filled with 300 g of crushed ice. The mixture was stirred for a few minutes, allowing the ice to melt. A 2M hydrochloric acid solution was added until a pH of about 7 was reached. The organic phase containing the product was washed with water and subsequently dried with anhydrous magnesium sulfate. The solution was filtered and the solvents were removed by means of a rotary evaporator (at 40°C /10 mbar). A colourless liquid was obtained. The resulting liquid was found to contain 92.1 % dibutyl dibenzyl tin and 7.9% dibenzyl. The dibenzyl was removed by falling film distillation at 110°C. The resulting product (138 g, 92% yield) was identified as dibutyl dibenzyl tin by H-NMR: δ (ppm) = 0.82(m, 5H); 1.21 (m, 2H); 1.32 (m, 2H); 2.28 (t, 2H); 6.8-7.3(m, 5H).

### Preparation of dibutyl di(1-naphthalenylmethyl) tin

In a dry 2 I 3-necked flask under nitrogen atmosphere, equipped with a dropping funnel with pressure compensation, a thermometer, a magnetic stir bar, and a condenser were placed 7.29 g (0.3 moles) of magnesium turnings. Added were 30 ml of dry diethylether, a small crystal of iodine, and about 50 ml of a solution of 53.0 g (0.3 moles) of 1-(chloromethyl) naphthalene in 900 ml of dry diethylether. After about 5 minutes, the reaction started. The onset of the reaction was accompanied by the disappearance of the brown iodine colour and a rising temperature. The remainder of the 1-(chloromethyl) naphthalene in diethylether was added during one hour. The mixture was stirred at room temperature for another hour. A yellow solution with some residual magnesium was obtained. The solution was decanted into another dry 2 I 3-necked flask under nitrogen atmosphere to remove the residual magnesium. The (1-naphthalenylmethyl)-magnesium chloride solution was cooled with an ice bath. A dropping funnel was filled with a solution of 22.8 g dibutyl tin chloride (0.15 moles) in 75 ml of dry diethylether. To the stirred (1-naphthalenylmethyl)magnesium chloride the dibutyltin chloride solution was then added in the course of about 30 minutes, with a maximum reaction temperature of 25°C being maintained. The reaction mixture was stirred overnight at room temperature. The next day the mixture was slowly poured into a 3 I beaker filled with 100 g of crushed ice. The mixture was stirred for a few minutes, allowing the ice to melt. A 2M hydrochloric acid solution was added until a pH of about 7 was reached. The organic phase containing the product was washed with water and subsequently dried with anhydrous magnesium sulfate. The solution was filtered and the solvents were removed by means of a rotary evaporator (at 40°C /10 mbar). A yellow oil was obtained. This oil was transferred to a Kugelrohr distillation apparatus. Low- boiling side products were removed by vacuum distillation in a Kugelrohr (100°C, 0.08 mbar). The residue was identified as dibutyl di(1-naphthalenylmethyl) tin. H-NMR: δ (ppm) = 0.69 (m, 5H); 1.04 (m, 2H); 1.15 (m, 2H); 2.63 (t, 2H); 6.9-7.8(m, 7H).

### Preparation of dibutyl di(3-methoxybenzyl) tin

In a dry 500 ml 3-necked flask under nitrogen atmosphere, equipped with a dropping funnel with pressure compensation, a thermometer, a magnetic stir bar, and a condenser were placed 3.1 g (0.13 moles) of magnesium turnings. Added were 15 ml of dry diethylether, a small crystal of iodine, and about 15 ml of a solution of 20.0 g. (0.13 moles) of 3-methoxybenzylchloride in 100 ml of dry diethylether. After about 5 minutes, the reaction started. The onset of the reaction was accompanied by the disappearance of the brown iodine colour and a rising temperature. The remainder of the 3-methoxybenzylchloride in diethylether was added during one hour. The mixture was stirred at room temperature for another hour. A dark blue solution with some residual magnesium was obtained. The solution was decanted into another dry 500 ml 3-necked flask under nitrogen atmosphere to remove the residual magnesium. The 3-methoxybenzylmagnesium chloride solution was cooled with an ice bath. A dropping funnel was filled with a solution of 16.2 g dibutyl tin chloride (0.11 moles) in 40 ml of dry diethylether. To the stirred 3-methoxybenzylmagnesium chloride the dibutyltin chloride solution was then added during 30 minutes, with a maximum reaction temperature of 25°C being maintained. The reaction mixture was stirred overnight at room temperature. The next day the mixture was slowly poured into a 500 ml beaker filled with 50 g of crushed ice. The mixture was stirred for a few minutes, allowing the ice to melt. A 2M hydrochloric acid solution was added until a pH of about 7 was reached. The organic phase containing the product was washed with water and subsequently dried with anhydrous magnesium sulfate. The solution was filtered and the solvents were removed by means of a rotary evaporator (at 40°C / 10 mbar). A clear colourless liquid (23.6 g, 93% yield) was obtained, which was identified as dibutyl di(3-methoxybenzyl) tin. H-NMR: δ (ppm) = 0.80 (m, 5H); 1.19 (m, 2H); 1.32 (m, 2H); 2.24 (t, 2H); 3.71 (s, 3H); 6.4-6.6 (m, 3H); 7.04 (t, 1 H).

### Examples 1 to 3

Clear coat compositions 1 to 3 comprising different photolatent catalysts were prepared by mixing the components as indicated in Table 1 :

**Table 1**

| Component | Example 1 | Example 2 | Example 3 |
|---|---|---|---|
| Tolonate HDT-LV | 10.0 g | 10.0 g | 10.0 g |
| Polyester polyol | 10.0 g | 10.0 g | 10.0 g |
| Dibutyl dibenzyl tin | 0.15 g | | |
| Dibutyl di(1-naphtha-lenylmethyl) tin | - | 0.20 g | - |
| Dibutyl di(3-methoxybenzyl) tin | - | - | 0.23 g |
| BYK 306 solution | 0.35 g | 0.35 g | 0.35 g |
| Xylene | 3.5 g | 3.5 g | 3.5 g |

### Examples 4 to 6

Clear coat compositions 4 to 6 comprising different sensitizers were prepared by mixing the components indicated in Table 2. Example 6 is a reference example.

**Table 2**

| Component | Example 4 | Example 5 | Example 6 |
|---|---|---|---|
| Tolonate HDT-LV | 10.0 g | 10.0 g | 10.0 g |
| Polyester polyol | 10.0 g | 10.0 g | 10.0 g |
| Dibutyl dibenzyl tin | 0.15 g | 0.15 g | 0.15 g |
| ITX solution | 0.50 g | - | - |
| BMS solution | - | 0.50 g | - |
| Irgacure 184 solution | - | - | 0.50 g |
| BYK 306 solution | 0.35 g | 0.35 g | 0.35 g |
| Xylene | 3.5 g | 3.5 g | 3.5 g |

### Comparative Examples A to D

Comparative clear coat compositions A to D were prepared by mixing the components indicated in Table 3. Comparative composition A comprises no added catalyst. Comparative composition B comprises a known non-latent catalyst, i.e. dibutyl tin dilaurate. Comparative compositions C and D comprise known photolatent catalysts outside the scope of the present invention.

**Table 3**

| Component | Example A | Example B | Example C | Example D |
|---|---|---|---|---|
| Tolonate HDT-LV | 10.0g | 10.0g | 10.0g | 10.0g |
| Polyester polyol | 10.0g | 10.0g | 10.0g | 10.0g |
| Byk 306 | 0.03 g | 0.03 g | 0.03 g | 0.03 g |
| Xylene | 4.0g | 4.0g | 4.0g | 4.0g |
| DBTL solution | - | 0.14g | - | - |
| Photolatent base solution | | | 0.8 g | |
| Cyclopentadienyl iron compound solution | | | | 0.48 |

The clear coat compositions were applied with a drawing bar to metal panels precoated with a light grey coil coat to give a dry layer thickness of 60 µm.

The drying times of the clear coats are summarized in Table 4 below.

**Table 4**

| Example | Gel time (hours) | Drying time (hours)¹⁾ | Drying time UV-A (hours)²⁾ | Drying time UV-B (hours)³⁾ |
|---|---|---|---|---|
| 1 | >24 | >3 | 1 | 0.50 |
| 2 | >24 | >3 | 0.65 | 0.25 |
| 3 | >3<24 | >3 | 1 | 0.25 |
| 4 | >24 | >3 | 0.30 | 0.33 |
| 5 | >24 | >3 | 0.25 | n.d.⁴⁾ |
| 6 | >24 | >3 | 0.53 | n.d. |
| A | >24 | >24 | >3 | n.d. |
| B | <0.6 | 1.5 | n.d. | n.d. |
| C | >24 | >24 | >24 | n.d. |
| D | 6-7 | 2.5 | 0.25-0.5 | n.d. |

| | | | | |
|---|---|---|---|---|
| 1) determined at 21<0>C without irradiation with UV light; indicated is the time until drying phase 9 as described above was reached 2) determined during irradiation with a TL 10 lamp emitting UV-A radiation, at a distance of 10 cm between lamp and coated substrate; indicated is the time until drying phase 9 as described above was reached 3) determined during irradiation with a TL 12 lamp emitting UV-B radiation, at a distance of 10 cm between lamp and coated substrate; indicated is the time until drying phase 9 as described above was reached 4) value was not determined | | | | |

From Table 4 it can be inferred that the coating compositions according to the invention exhibit a long gel time. This is the time between mixing of the components and gelation of the composition when stored at ambient temperature. In most cases the gel time is on the same level as the gel time of comparative composition A comprising no added cure catalyst at all. A long gel time also indicates that the compositions have a long pot life. The gel time of comparative composition B comprising a non-latent curing catalyst is very short. The drying time of the compositions was also determined without irradiation with UV light, i.e. under illumination with normal daylight. Under these circumstances all compositions comprising a latent catalyst exhibit very slow drying, indicating that they are not prone to activation towards curing by unintended exposure to normal daylight, for example prior to application. Examples 1 to 3 demonstrate that the process according to the invention provides fast curing coatings upon irradiation with UV light, even when the coating compositions do not comprise a sensitizer. Activation of the catalyst is possible by the less dangerous UV-A and UV-B radiation and does not require the dangerous UV-C radiation. The compositions according to the invention of Examples 4 to 5 additionally comprise a sensitizer. These compositions exhibit even faster drying upon irradiation with UV-A light than the compositions of Examples 1 to 3 without a sensitizer. It should be noted that the drying times of Examples 1 to 5 according to the invention are faster than the drying time of comparative Example B comprising a non-latent catalyst. Comparative Example A without any added curing catalyst has a very long gel time, but also an unacceptably long curing time. Any colour formation of the applied and cured clear coats was determined visually by comparison with comparative Example B, which served as a reference. All clear coats of Examples 1 to 6 had an acceptable colour and therefore were suitable for applications wherein a colour match with surrounding coated surfaces is required.

Comparative Example C comprises a photolatent base. This composition exhibits no cure response at all upon irradiation with UV light. Comparative Example D comprises (eta-5-cyclopentadienyl) (eta-6-fluorene) iron hexafluoro- phosphate according to US 4740577 as latent catalyst. This compound does not have a covalent bond between iron and a carbon atom of the organic groups. The latency of this compound is not fully satisfactory, as is indicated by the relatively short gel time and drying time without UV radiation. Furthermore, the cured coating of comparative Example D was coloured and therefore not suitable for applications wherein a colour match with surrounding coated surfaces is required.

## Claims

1. A actinic radiation-curable coating composition comprising a compound having at least two isocyanate groups, a compound having at least two hydroxyl groups, a sensitizer, selected from thioxanthanes, oxazines, rhodamines, benzophenone, and benzophenone derivatives and a photolatent catalyst for the isocyanate-hydroxyl addition reaction, wherein the photolatent catalyst is an organic metal compound comprising tin, and wherein the tin atom in the organic metal compound has no bonds to other metal atoms and wherein the organic metal compound is a compound having at least one covalent bond between a tin atom and a carbon atom of an organic moiety.

2. An actinic radiation-curable coating composition according to claim 1, wherein the photolatent catalyst has at least one organic group attached to the metal via a photolytically cleavable bond.

3. An actinic radiation-curable coating composition according to claim 2, wherein the photolatent catalyst has two organic groups attached to the metal via photolytically cleavable bonds.

4. An actinic radiation-curable coating composition according to claim 2 or 3, wherein the at least one organic group attached to the metal via a photolytically cleavable bond is an aryl group.

5. An actinic radiation-curable coating composition according to claim 4, wherein the aryl group is a benzyl group.

6. A process of forming a coating on a substrate comprising the steps of
(a) applying an actinic radiation-curable coating composition comprising a compound having at least two isocyanate groups, a compound having at least two hydroxyl groups, and a photolatent catalyst for the isocyanate-hydroxyl addition reaction, wherein the photolatent catalyst is an organic metal compound comprising tin, and wherein the tin atom in the organic metal compound has no bonds to other metal atoms and wherein the organic metal compound is a compound having at least one covalent bond between a tin atom and a carbon atom of an organic moiety, to a substrate, and
(b) irradiating the applied coating composition with actinic radiation, causing the photolatent catalyst to be activated.

7. A process according to claim 6, wherein the actinic radiation-curable coating composition additionally comprises a sensitizer, selected from thioxanthanes, oxazines, rhodamines, benzophenone, and benzophenone derivatives.

8. A process according to claim 7, wherein the applied coating composition is irradiated with UV-A radiation.

9. A process according to any one of the preceding claims 6 to 8, wherein the process is implemented for the finishing and refinishing of automobiles and transportation vehicles.

10. A process according to any one of the preceding claims 6 to 9, wherein the formed coating is a layer in a multi-layer lacquer coating.

11. A process according to claim 10, wherein the formed coating is a top coat layer in a multi-layer lacquer coating.

12. A kit of parts for the preparation of an actinic radiation-curable coating composition comprising
a) a module A) comprising a compound having at least two isocyanate groups, and
b) a module B) comprising a compound having at least two hydroxyl groups,
and wherein in at least one of the modules A) and B), or in an additional module C), there are present a sensitizer, selected from thioxanthanes, oxazines, rhodamines, benzophenone, and benzophenone derivatives, and a photolatent catalyst for the isocyanate-hydroxyl addition reaction, wherein the photolatent catalyst is an organic metal compound comprising tin metal, and wherein the tin atom in the organic metal compound has no bonds to other metal atoms and wherein the organic metal compound is a compound having at least one covalent bond between a tin atom and a carbon atom of an organic moiety.

## Patentansprüche

1. Beschichtungs-Zusammensetzung, die durch aktinische Strahlung härtbar ist, umfassend eine Verbindung mit mindestens zwei Isocyanat-Gruppen, eine Verbindung mit mindestens zwei Hydroxyl-Gruppen, einen Sensibilisator, ausgewählt aus Thioxanthanen, Oxazinen, Rhodaminen, Benzophenon und Benzophenon-Derivaten, und einen photolatenten Katalysator für die Isocyanat-Hydroxyl-Additions-Reaktion, wobei der photolatente Katalysator eine Zinn umfassende organische Metall-Verbindung ist, und wobei das Zinn-Atom in der organischen Metall-Verbindung keine Bindungen zu anderen Metall-Atomen aufweist und wobei die organische Metall-Verbindung eine Verbindung mit mindestens einer kovalenten Bindung zwischen einem Zinn-Atom und einem Kohlenstoff-Atom von einer organischen Einheit ist.

2. Beschichtungs-Zusammensetzung, die durch aktinische Strahlung härtbar ist, nach Anspruch 1, wobei der photolatente Katalysator mindestens eine an das Metall über eine photolytisch spaltbare Bindung gebundene organische Gruppe aufweist.

3. Beschichtungs-Zusammensetzung, die durch aktinische Strahlung härtbar ist, nach Anspruch 2, wobei der photolatente Katalysator zwei an das Metall über photolytisch spaltbare Bindungen gebundene organische Gruppen aufweist.

4. Beschichtungs-Zusammensetzung, die durch aktinische Strahlung härtbar ist, nach Anspruch 2 oder 3, wobei die mindestens eine an das Metall über eine photolytisch spaltbare Bindung gebundene organische Gruppe eine Aryl-Gruppe

5. Beschichtungs-Zusammensetzung, die durch aktinische Strahlung härtbar ist, nach Anspruch 4, wobei die Aryl-Gruppe eine Benzyl-Gruppe ist.

6. Verfahren zum Bilden einer Beschichtung auf einem Substrat, umfassend die Schritte von
(a) Auftragen einer durch aktinische Strahlung härtbaren Beschichtungs-Zusammensetzung, umfassend eine Verbindung mit mindestens zwei Isocyanat-Gruppen, eine Verbindung mit mindestens zwei Hydroxyl-Gruppen und einen photolatenten Katalysator für die Isocyanat-Hydroxyl-Additions-Reaktion, wobei der photolatente Katalysator eine Zinn umfassende organische Metall-Verbindung ist und wobei das Zinn-Atom in der organischen Metall-Verbindung keine Bindungen an andere Metall-Atome aufweist und wobei die organische Metall-Verbindung eine Verbindung mit mindestens einer kovalenten Bindung zwischen einem Zinn-Atom und einem Kohlenstoff-Atom von einer organischen Einheit an ein Substrat ist, und
(b) Bestrahlen der aufgetragenen Beschichtungs-Zusammensetzung mit aktinischer Strahlung, wodurch der photolatente Katalysator aktiviert wird.

7. Verfahren nach Anspruch 6, wobei die Beschichtungs-Zusammensetzung, die durch aktinische Strahlung härtbar ist zusätzlich einen Sensibilisator, ausgewählt aus Thioxanthanen, Oxazinen, Rhodaminen, Benzophenon und Benzophenon-Derivaten, umfasst.

8. Verfahren nach Anspruch 7, wobei die aufgetragene Beschichtungs-Zusammensetzung mit UV-A-Strahlung bestrahlt wird.

9. Verfahren nach einem der vorangehenden Ansprüche 6 bis 8, wobei das Verfahren für die Lackierung und Reparaturlackierung von Kraftfahrzeugen und Transport-Fahrzeugen angewendet wird.

10. Verfahren nach einem der vorangehenden Ansprüche 6 bis 9, wobei die gebildete Beschichtung eine Schicht in einer Mehr-Schicht-Lack-Beschichtung ist.

11. Verfahren nach Anspruch 10, wobei die gebildete Beschichtung eine Deck-Lack-Schicht in einer Mehr-Schicht-Lack-Beschichtung ist.

12. Kit-of-Parts zur Herstellung von einer durch aktinische Strahlung härtbaren Beschichtungs-Zusammensetzung, umfassend
a) ein Modul A), umfassend eine Verbindung mit mindestens zwei Isocyanat-Gruppen, und
b) ein Modul B), umfassend eine Verbindung mit mindestens zwei Hydroxyl-Gruppen,
und wobei in mindestens einem von den Modulen A) und B) oder in einem zusätzlichen Modul C) ein Sensibilisator, ausgewählt aus Thioxanthanen, Oxazinen, Rhodaminen, Benzophenon und Benzophenon-Derivaten, und ein photolatenter Katalysator für die Isocyanat-Hydroxyl-Additions-Reaktion vorliegt, wobei der photolatente Katalysator eine Zinn-Metall umfassende organische Metall-Verbindung ist, und wobei das Zinn-Atom in der organischen Metall-Verbindung keine Bindungen zu anderen Metall-Atomen aufweist und wobei die organische Metall-Verbindung eine Verbindung mit mindestens einer kovalenten Bindung zwischen einem Zinn-Atom und einem Kohlenstoff-Atom von einer organischen Einheit ist.

## Revendications

1. Composition de revêtement durcissable par rayonnement actinique comprenant un composé ayant au moins deux groupes isocyanate, un composé ayant au moins deux groupes hydroxyle, un sensibilisant choisi parmi les thioxanthanes, les oxazines, les rhodamines, la benzophénone et les dérivés de benzophénone, et un catalyseur photolatent pour la réaction d'addition isocyanate-hydroxyle, le catalyseur photolatent étant un composé organométallique comprenant de l'étain, et l'atome d'étain dans le composé organométallique n'ayant aucune liaison avec d'autres atomes de métaux et le composé organométallique étant un composé ayant au moins une liaison covalente entre un atome d'étain et un atome de carbone d'un groupement organique.

2. Composition de revêtement durcissable par rayonnement actinique selon la revendication 1, dans laquelle le catalyseur photolatent a au moins un groupe organique attaché au métal par le biais d'une liaison clivable photolytiquement.

3. Composition de revêtement durcissable par rayonnement actinique selon la revendication 2, dans laquelle le catalyseur photolatent a deux groupes organiques attachés au métal par le biais de liaisons clivables photolytiquement.

4. Composition de revêtement durcissable par rayonnement actinique selon la revendication 2 ou 3, dans laquelle l'au moins un groupe organique attaché au métal par le biais d'une liaison clivable photolytiquement est un groupe aryle.

5. Composition de revêtement durcissable par rayonnement actinique selon la revendication 4, dans laquelle le groupe aryle est un groupe benzyle.

6. Procédé de formation d'un revêtement sur un substrat comprenant les étapes consistant à
(a) appliquer une composition de revêtement durcissable par rayonnement actinique comprenant un composé ayant au moins deux groupes isocyanate, un composé ayant au moins deux groupes hydroxyle, et un catalyseur photolatent pour la réaction d'addition isocyanate-hydroxyle, le catalyseur photolatent étant un composé organométallique comprenant de l'étain, et l'atome d'étain dans le composé organométallique n'ayant aucune liaison avec d'autres atomes de métaux et le composé organométallique étant un composé ayant au moins une liaison covalente entre un atome d'étain et un atome de carbone d'un groupement organique, à un substrat, et
(b) irradier la composition de revêtement appliquée avec un rayonnement actinique, pour activer le catalyseur photolatent.

7. Procédé selon la revendication 6, dans lequel la composition de revêtement durcissable par rayonnement actinique comprend également un sensibilisant choisi parmi les thioxanthanes, les oxazines, les rhodamines, la benzophénone, et les dérivés de benzophénone.

8. Procédé selon la revendication 7, dans lequel la composition de revêtement appliquée est irradiée avec un rayonnement UV-A.

9. Procédé selon l'une quelconque des revendications 6 à 8 précédentes, le procédé étant mis en oeuvre pour la finition et la retouche d'automobiles et de véhicules de transport.

10. Procédé selon l'une quelconque des revendications 6 à 9 précédentes, dans lequel le revêtement formé est une couche dans un revêtement laqué multicouche.

11. Procédé selon la revendication 10, dans lequel le revêtement formé est une couche de finition dans un revêtement laqué multicouche.

12. Trousse de pièces pour la préparation d'une composition de revêtement durcissable par rayonnement actinique comprenant
a) un module A) comprenant un composé ayant au moins deux groupes isocyanate, et
b) un module B) comprenant un composé ayant au moins deux groupes hydroxyle,
et dans laquelle dans au moins un des modules A) et B), ou dans un module supplémentaire C), sont présents un sensibilisant choisi parmi les thioxanthanes, les oxazines, les rhodamines, la benzophénone et les dérivés de benzophénone, et un catalyseur photolatent pour la réaction d'addition isocyanate-hydroxyle, le catalyseur photolatent étant un composé organométallique comprenant de l'étain métallique, et l'atome d'étain dans le composé organométallique n'ayant aucune liaison avec d'autres atomes de métaux et le composé organométallique étant un composé ayant au moins une liaison covalente entre un atome d'étain et un atome de carbone d'un groupement organique.
